# EUROPÄISCHE PATENTSCHRIFT

(11) **EP 3 792 107 B1**
(45) Veröffentlichungstag und Bekanntmachung des Hinweises auf die Patenterteilung: **12.04.2023**
(21) Anmeldenummer: 20200276.2
(22) Anmeldetag: 18.06.2019
(51) Int. Cl.: B60N 2/58, B60N 2/60, A47C 31/00, A47C 31/02, B68G 7/12, B60N 2/56

(54) **SITZVERKLEIDUNG, SOWIE VERFAHREN ZUR HERSTELLUNG EINER SITZVERKLEIDUNG**
SEAT CLADDING AND METHOD FOR MANUFACTURING SEAT CLADDING
HABILLAGE DE SIÈGE AINSI QUE PROCÉDÉ DE FABRICATION D'UN HABILLAGE DE SIÈGE

(43) Veröffentlichungstag der Anmeldung: 17.03.2021
(62) Teilanmeldung aus: 19180744.5
(73) Patentinhaber: Ford Global Technologies, LLC, Dearborn, MI 48126 (US)
(72) Erfinder: Castinel, Anais, 50733 Köln (DE); Kovacheva, Diana, 50674 Köln (DE); Rogers, Paul, Chelmsford, Essex CM3 5GB (GB)
(74) Vertreter: Markowitz, Markus

(56) Entgegenhaltungen:
- DE-A1- 10 013 492
- JP-A- 2000 354 525
- JP-A- 2003 013 346
- US-A- 5 308 141
- US-A- 6 151 926
- US-A1- 2018 201 167
- US-B1- 6 401 496

## Beschreibung

Die vorliegende Erfindung betrifft eine Sitzverkleidung für einen Fahrzeugsitz, die einen dreidimensional gestrickten Verkleidungskörper, sowie zumindest ein in den Verkleidungskörper integriertes funktionelles Element umfasst, wobei der Verkleidungskörper ein Abstandsgestrick ist, welches sich aus zwei beabstandet zueinander angeordneten Gestricklagen zusammensetzt, wobei zwischen den Gestricklagen zumindest ein Abstandshalter vorgesehen ist, und wobei innerhalb eines zwischen den Gestricklagen vorgesehenen Hohlraums zumindest ein zusätzliches funktionelles Element oder Bauteil eingefasst ist, insbesondere ein Heizelement, ein Sensor oder ein Kabel.

Sitzverkleidungen kommen grundsätzlich zur Abdeckung von Sitzen zum Einsatz. Dabei kann es sich um vielerlei Arten unterschiedlicher Sitze handeln. Unter Sitzen können im Zusammenhang dieser Erfindung u.a. Fahrzeugsitze (von radgebundenen oder schienengebundenen Fahrzeugen), Flugzeugsitze, Zuschauersitze etc. gemeint sein. Insbesondere bezieht sich die vorliegende Erfindung jedoch auf Sitzverkleidungen für Fahrzeugsitzen. Sitzverkleidungen haben dabei unterschiedliche Funktionen. Beispielsweise schützen sie den jeweiligen Sitz vor Verunreinigungen, mechanischen Belastungen (z.B. Abrieb) und ermöglichen somit eine erhöhte Lebensdauer des Sitzes. Weiterhin kann durch eine Sitzverkleidung ein zusätzlicher Komfort für den Nutzer des Sitzes (und der Sitzverkleidung) ermöglicht werden. Nutzer kann z.B. der Fahrer, Beifahrer oder ein Fahrgast eines Kraftfahrzeugs sein.

Dreidimensional gestrickte Sitzverkleidungen sind grundsätzlich bekannt. Unter 3D-Stricken bzw. der im Englischen verwendeten Bezeichnung "3D-Knitting" werden derartig gefertigte Sitzverkleidungen klassifiziert. Im Wege eines 3D Strickprozesses können unterschiedlichste Materialien zu technischen Textilien verarbeitet werden, insbesondere Naturfasern, chemische Fasern, Glas- und Kohlefasern, Mineralfasern, Drähte etc. Im Wege eines 3D Strickverfahrens gefertigte Gegenstände werden in der Regel an einem Stück gefertigt und weisen daher keine Nähte aus. Insbesondere bei Gegenständen, die permanenten Belastungen ausgesetzt sind, kann dies von Vorteil sein. Weiterhin ist die 3D-Stricktechnologie auch in ökologischer Hinsicht mit einer Reihe von Vorteilen verbunden. So entsteht beim 3D Stricken kaum Verschnitt, der Fertigungsprozess bzw. die Fertigungszeit ist verhältnismäßig kurz, da unter anderem die Verfahrensschritte des Zuschneidens und Vernähens entfallen. Dadurch werden die Durchlaufzeiten und die Fehleranfälligkeit reduziert. Im Vergleich dazu werden konventionell gefertigte Sitzverkleidungen hergestellt indem definiert geformte Stücke eines Stoffs ausgeschnitten und im Anschluss gesondert zusammengenäht werden.

Unter einem 3D-Strickverfahren können grundsätzlich verschiedene Strickverfahren verstanden werden, beispielsweise "Flat Knitting", "Warp Knitting", und "Circular Knitting". Im Rahmen der vorliegenden Erfindung ist unter 3D-Stricken bzw- 3D-Knitting ein "Flat Knitting" Verfahren zu verstehen, also das Flachstricken.

Eine im Wege eines 3D Strickverfahrens gefertigte Sitzverkleidung ist beispielsweise aus der Publikation EP 0 795 636 A1 bekannt, wobei die Sitzverkleidung einteilig als ein dreidimensionales Gestrick gefertigt wird. Die dortige Sitzverkleidung umgibt einen Airbag und ermöglicht eine einfache Ausdehnung des Airbags im Crash-Fall. Aufgrund der einteilig dreidimensionalen Fertigung der genannten Sitzverkleidung, sind weniger Prozessschritte für die Herstellung notwendig, wodurch die Fertigung kostengünstiger ist. Aus der EP 0 361 855 B1 ist ferner ein dreidimensional gefertigter Bekleidungsstoff zur Bekleidung einer dreidimensionalen Stütze, z.B. eines Kissens eines Fahrzeugsitzes, bekannt. DE10013492A1 offenbart einen 3D Gestrickabstand mit einem funktionellemen Element für eine Sitzpolsterung.

Ausgehend hiervon besteht die Aufgabe der Erfindung darin, eine Sitzverkleidung bereitzustellen, die sich einerseits kostengünstig, schnell und nachhaltig fertigen lässt, und die andererseits eine Mehrzahl verschiedener Funktionen erfüllen kann. Weitere Aufgaben der Erfindung liegen darin, die Drapierung der Sitzverkleidung auf einem Sitz zu erleichtern und einen höheren Sitzkomfort zu gewährleisten. Gleichsam liegt der vorliegenden Erfindung die Aufgabe zugrunde ein Verfahren zur Herstellung einer Sitzverkleidung bereitzustellen, welches kostengünstig ist, eine schnelle und nachhaltige Fertigung ermöglicht und mit dem eine Sitzverkleidung gefertigt werden kann, die eine Mehrzahl verschiedener Funktionen erfüllen kann, die sich auf einem Sitz leicht drapieren lässt und einen höheren Sitzkomfort bereitstellt.

Die genannte Aufgabe wird mit einer Sitzverkleidung nach Patentanspruch 1 gelöst. Ferner wird die Aufgabe mit einem Verfahren zur Herstellung einer Sitzverkleidung nach Patentanspruch 11 gelöst.

Die mit der hiesigen Erfindung vorgeschlagene Sitzverkleidung eignet sich insbesondere zur Verwendung mit einem Fahrzeugsitz. Dabei weist die Sitzverkleidung einen dreidimensional gestrickten Verkleidungskörper, sowie ein in den Verkleidungskörper integriertes funktionelles Element auf. Erfindungsgemäß ist der Verkleidungskörper ein Abstandsgestrick, welches sich aus zwei beabstandet zueinander angeordneten Gestricklagen zusammensetzt. Zwischen den Gestricklagen ist zumindest ein Abstandshalter vorgesehen, wobei innerhalb eines zwischen den Gestricklagen vorgesehenen Hohlraums zumindest ein zusätzliches funktionelles Element oder Bauteil eingefasst ist, insbesondere ein Heizelement, ein Sensor oder ein Kabel.

Abstandsgestricke bieten den Vorteil, dass die vom Körper einer auf der Sitzverkleidung aufsitzenden Person ausgehende Wärme und Feuchtigkeit abgeführt werden kann und nicht im Sitz bzw. der Sitzverkleidung akkumuliert wird. Vielmehr kann die Wärme und Feuchtigkeit durch die Hohlräume zwischen den Deckschichten abgeführt werden. Dadurch kann der Sitzkomfort zusätzlich erhöht werden. Ein weiterer Vorteil liegt darin, dass innerhalb der zwischen den Gestricklagen vorgesehenen Hohlräume zusätzliche funktionelle Elemente oder Bauteile eingefasst werden können, beispielsweise Heizelemente, Sensoren oder Kabel.

Der Verkleidungskörper umfasst ein einteilig im Wege eines 3D-Knitting Verfahrens gefertigtes Gestrick. Die Form und die Bemaßung des Verkleidungskörpers richtet sich nach den jeweiligen Anforderungen des zu verkleidenden Sitzes, insbesondere des Fahrzeugsitzes. Bereits hier können sich deutliche Unterschiede bestehen, denn ein Fahrersitz eines Kraftfahrzeugs weist bekanntlich eine andere Form und Dimensionierung auf als ein Rücksitz eines Kraftfahrzeugs.

Grundsätzlich kann das funktionelle Element auf eine beliebige Art und Weise in das Gestrick integriert werden. Unter "Integration" ist zunächst zu verstehen, dass das funktionelle Element mit dem Verkleidungskörper verbunden ist. Dabei ist "Integration" nicht dahingehend zu verstehen, dass das funktionelle Element vollständig und allseitig vom Material des Verkleidungskörpers umgeben bzw. in diesen eingebettet sein muss. Auch eine Befestigung an einer Oberfläche des Verkleidungskörpers ist als "Integration" im Sinne der vorliegenden Erfindung zu verstehen. Durch die unmittelbare Integration von funktionellen Elementen wird einerseits die Funktionalität der Sitzverkleidung erhöht. Andererseits müssen derartige Elemente nicht in aufwendigen zusätzlichen Schritten an dem Verkleidungskörper befestigt (z.B. angenäht) werden. Besonders vorteilhaft ist es demnach, wenn das zumindest eine funktionelle Element bereits im Wege des 3D Knitting Verfahrens in den Verkleidungskörper integriert wird. Ein solches Vorgehen resultiert zudem in einer besonders stabilen Verbindung zwischen Verkleidungskörper und dem zumindest einen funktionellen Element.

Weitere vorteilhafte Ausgestaltungen der erfindungsgemäßen Sitzverkleidung sind in den Unteransprüchen sowie der nachfolgenden Beschreibung weiterer vorteilhafter Ausgestaltungen der Erfindung angegeben. Auch auf die in den Unteransprüchen bezeichneten Merkmale sei nachfolgend Bezug genommen.

Nach einer ersten bevorzugten Ausgestaltung der erfindungsgemäßen Sitzverkleidung kann das funktionelle Element in den Verkleidungskörper eingestrickt sein. Dadurch wird die Notwendigkeit einer Nachkonfektionierung der Sitzverkleidung vermieden und der Verschnitt kann reduziert werden. Ferner wird dadurch vermieden, dass zur Ausbildung der Funktionselemente zusätzliche Materialien eingesetzt werden müssen, da bereits das zur gestrickweisen Fertigung des Verkleidungskörpers verwendete Ausgangsmaterial, beispielsweise ein Fadenmaterial, für die Ausbildung der funktionellen Elemente verwendet werden kann. Weiterhin kann auf diesem Wege auch eine Gewichtsreduzierung der Sitzverkleidung erreicht werden.

Nach einer weiteren vorteilhaften Ausgestaltung der erfindungsgemäßen Sitzverkleidung kann die Sitzverkleidung einteilig gefertigt sein. Eine einteilige Fertigung ermöglicht zunächst eine endkonturnahe Fertigung, d. h. eine Fertigung, deren Endprodukte bereits einer Kontur des Endprodukts entsprechen bzw. diesem nahe kommen. Dadurch werden notwendige Prozessschritte und der Verschnitt verringert. Der Verschnitt fällt beim Zuschnitt des Produkts an und wird häufig als Primärabfall bezeichnet, da eine Wiederverwertung, also eine Rückführung in den Prozess, nicht vorgesehen ist, so dass der anfallende Verschnitt in der Regel entsorgt wird bzw. einer Kaskadennutzung zu geführt wird. Eine Reduzierung von Prozessschritten geht mit einem reduzierten Energieaufwand einher, während sich eine Reduzierung des Verschnitts auf eine Reduzierung der Abfallmengen auswirkt. Beide Aspekte erhöhen die Nachhaltigkeit bei der Fertigung von Sitzverkleidungen.

Nach einer weiteren Ausgestaltung der vorliegenden Erfindung kann das funktionelle Element eine Lasche sein. Mit einer solchen Lasche kann die Sitzverkleidung in komfortabler Weise auf einem Fahrzeugsitz angeordnet und drapiert werden. Die Lasche fungiert dabei insbesondere als Zugelement, mit welchem die Sitzverkleidung über den Fahrzeugsitz gezogen werden kann. Die konkrete Position der Lasche an der Sitzverkleidung ist dabei nicht festgelegt. So kann die Lasche beispielsweise im Bereich eines die Sitzfläche eines Fahrzeugsitzes überdeckenden Bereichs der Sitzverkleidung vorgesehen sein, oder in einem die Rücklehne bedeckenden Bereich der Sitzverkleidung.

Nach einer weiteren vorteilhaften Ausgestaltung der vorliegenden Erfindung kann das funktionelle Element ein Riemen sein, der den Fahrzeugsitz zumindest teilweise umgibt und zur Fixierung der Sitzverkleidung an dem Fahrzeugsitz vorgesehen ist. Durch die Fixierung wird ein nachträgliches Verrutschen der Sitzverkleidung auf dem Fahrzeugsitz verhindert. Gleichzeitig wird das Handling während des Drapierens verbessert. Auch können mehrere Riemen an der Sitzverkleidung ausgebildet sein. Da die Riemen in einem später nicht sichtbaren Bereich angeordnet sind, können sie für die Produktion relevante Informationen enthalten, die beispielsweise aufgestickt oder auf in darin eingefassten (elektronischen) Speicherelementen oder RFID Tags abgelegt sind.

Nach einer weiteren vorteilhaften Ausgestaltung der Erfindung kann vorgesehen sein, dass das funktionelle Element eine in dem Verkleidungskörper ausgebildete Öffnung bzw. Aussparung ist. Durch die gezielte Ausbildung von Öffnungen bzw. Aussparungen im Wege eines 3D-Knitting Verfahrens wird der anfallende Verschnitt weiter reduziert. Gleichzeitig entfällt der Prozessschritt der Nachkonfektionierung, d. h. einem gezielten Herausschneiden von Strickmaschen und einem anschließenden Umnähen der Schnittkanten. Herausgeschnittene Öffnungen können zudem Fehlstellen im Gestrick verursachen. Jede Fehlstelle ist immer auch eine potentielle Schwachstelle der Sitzverkleidung, die beispielsweise aufreißen kann. In einem solchen Fall müsste die Sitzverkleidung nachgearbeitet (repariert) oder ausgetauscht werden, was wiederrum mit einem zusätzlichen Kostenaufwand verbunden ist. Somit wird die Lebensdauer der Sitzverkleidung erhöht und somit auch ihre Nachhaltigkeit.

Nach einer weiteren vorteilhaften Ausgestaltung der Erfindung kann das funktionelle Element eine Verstärkungsstruktur, vorzugsweise eine Rippe, sein. Bei Anordnung einer derartigen Verstärkungsstruktur zwischen Sitzverkleidung und Fahrzeugsitz, kann die Haftreibung zwischen diesen beiden Reibpartnern erhöht werden, wodurch eine positionsfeste Anordnung der Sitzverkleidung erhöht wird, d.h. die Sitzverkleidung neigt dazu, in ihrer drapierten Position zu verbleiben. Letztlich wird durch eine solche Ausbildung einer Verstärkungsstruktur die Rutschfestigkeit der Sitzverkleidung erhöht. Bei Anordnung der Verstärkungsstruktur auf einer nach außen gewandten Oberfläche der Sitzverkleidung, d.h. dem Sitz abgewandt bzw. einer auf der Sitzverkleidung aufsitzenden Person zugewandt, wird die Haftreibung zwischen aufsitzender Person und Sitzverkleidung erhöht, wodurch einerseits der Sitzkomfort erhöht wird, als auch die Materialabnutzung der Sitzverkleidung reduziert wird (durch eine Reduzierung von Reibungsbewegungen).

Nach einer weiteren vorteilhaften Ausgestaltung der vorliegenden Erfindung kann das funktionelle Element ein Kanal sein. Der Kanal kann beispielsweise durch eine in das Gestrick eingestrickte Falte ausgebildet werden. Durch einen solchen Kanal kann ein Fixierelement hindurchgeführt werden. Als Fixierelement kann beispielsweise ein Draht genutzt werden, mit welchem der Bezug an einem Grundgerüst des Fahrzeugsitzes angebracht wird und somit die Sitzverkleidung auf dem Fahrzeugsitz fixiert. Grundsätzlich kann aber auch jedes andere Material oder Gegenstand, welche sich zur Fixierung eignen, hierfür genutzt werden, beispielsweise ein Textilband, eine Kordel usw. In dem Kanal können auch anderweitige Komponenten, beispielsweise Signalleitungen, elektrische Versorgungsleitungen etc. geführt sein. Ohne Weiteres kann die Sitzverkleidung auch mehrere Kanäle aufweisen. Die Position eines solchen Kanals ist dabei nicht festgelegt.

Nach einer weiteren Ausgestaltung der Erfindung kann vorgesehen sein, dass auf einer Außenseite des Kanals (oder eines jeden Kanals) eine Mehrzahl von Schlaufen angeordnet ist. Die Schlaufen können aus einem biegeweichen Multifilament oder einem biegeweichen Monofilament ausgebildet sein. Die Schlaufen können von einer Mehrzahl von Widerhaken, die beispielsweise aus einem biegesteifen Monofilament ausgebildet sein können, erfasst werden, sodass eine Klettverschlusswirkung erreicht werden kann. Die Widerhaken können zum Beispiel auf dem Fahrzeugsitz angebracht sein, wodurch die Sitzverkleidung auf dem Fahrzeugsitz fixiert wird. Da bereits ein Teil des Klettverschlusses in die Sitzverkleidung während des Strickprozesses integriert werden kann, können an den Strickprozess nachgeschaltete Prozessschritte entfallen, ein Konfektionieren und ein Annähen des Klettverschlusses auf die Sitzverkleidung. Lediglich die Widerhaken müssen auf den Fahrzeugsitz konfektioniert werden. Grundsätzlich kann aber auch jede andere Form der lösbaren Verbindung und Fixierung vorgesehen sein.

Grundsätzlich kann die Sitzverkleidung aus einem auf eine beliebige Art und Weise ausgebildeten Abstandsgestrick hergestellt werden. Nach einer weiteren Ausgestaltung der Erfindung kann vorgesehen sein, dass die Gestricklagen ein biegeweiches Fadenmaterial umfassen, und dass der Abstandshalter ein biegesteifes Fadenmaterial umfasst. Für die Gestricklagen kann ein Multifilament oder ein Stapelfasergarn eingesetzt werden, um eine ausreichende Haptik zu gewährleisten. Für den Abstandshalter kann ein biegesteifes Material verwendet werden, beispielsweise ein Monofilament. Als Abstandshalter können auch andere Materialien wie Schaumstoffe eingesetzt werden, jedoch entfallen in diesem Fall die anfangs genannten Vorteile.

Die Abstandshalter zwischen den Deckschichten können außerdem aus Monofilamenten mit unterschiedlichem Biegeradius ausgebildet sein, wodurch eine zusätzliche Stützwirkung für den Körper des Fahrers erreicht werden kann, sodass auch bei längeren Fahrten der Sitzkomfort hoch bleibt.

Grundsätzlich kann die Sitzverkleidung nach einem beliebigen aus dem Stand der Technik bekannten Verfahren hergestellt werden. Vorzugsweise wird die Sitzverkleidung jedoch im Wege eines 3D-Knitting Prozesses gefertigt. Dieser Prozess ermöglicht eine endkonturnahe Fertigung, d. h. das Verschnittaufkommen wird deutlich reduziert. Ferner benötigt ein solches Verfahren eine geringere Anzahl von Fertigungsschritten, ermöglicht eine nachhaltigere Fertigung und stellt ein Gestrick mit relativ wenigen Schwachstellen bereit. Entsprechend liegt der vorliegenden Erfindung auch ein Verfahren zur Herstellung einer Sitzverkleidung mit den vorangehend beschriebenen Merkmalen zugrunde, welches sich dadurch auszeichnet, dass die Sitzverkleidung im Wege eines 3D-Knitting Prozesses gefertigt wird.

Weitere vorteilhafte Ausgestaltungen der Erfindung ergeben sich aus der nachfolgenden Beschreibung unter Bezugnahme auf die Figuren. In den Figuren zeigt
- Fig. 1: eine schematische Darstellung eines Fahrzeugsitzes samt darauf angeordneter Sitzverkleidung in einer perspektivischen Ansicht,
- Fig. 2: eine schematische Darstellung eines Ausschnitts einer erfindungsgemäßen Sitzverkleidung,
- Fig. 3: eine schematische Schnittansicht einer Fixierung der erfindungsgemäßen Sitzverkleidung am Fahrzeugsitz,
- Fig. 4: eine schematische Darstellung eines Ausschnitts der erfindungsgemäßen Sitzverkleidung samt eingestrickter Aussparung,
- Fig. 5: eine schematische Darstellung eines Ausschnitts der erfindungsgemäßen Sitzverkleidung samt eingestrickten Verstärkungsstrukturen,
- Fig. 6: eine schematische Darstellung eines Ausschnitts der erfindungsgemäßen Sitzverkleidung samt eingestricktem Kanal und
- Fig. 7: eine schematische Darstellung eines Ausschnitts der erfindungsgemäßen Sitzverkleidung samt eingestricktem Kanal und auf diesem Kanal angeordneten Schlaufen.

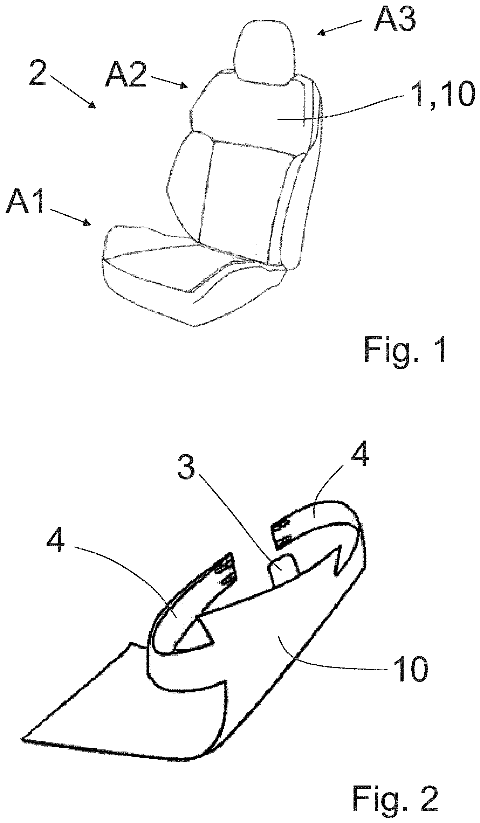

Die Figur 1 zeigt in einer perspektivischen Ansicht einen Fahrzeugsitz 2 samt einer den Fahrzeugsitz 2 umhüllenden Sitzverkleidung 1. Bei der erfindungsgemäßen Sitzverkleidung 1 handelt es sich um eine dreidimensional gestrickte Sitzverkleidung 1 mit einem Verkleidungskörper 10, der an die Form des Fahrzeugsitzes 2 angepasst ist. Dies bewirkt, dass die Sitzverkleidung 1 nicht nachkonfektioniert werden muss.

Ein Fahrzeugsitz 2 kann grundsätzlich in mehrere Abschnitte A eingeteilt werden. So weist ein Fahrzeugsitz 2 in der Regel einen Abschnitt A1 auf, welcher eine Sitzfläche bereitstellt. Ein weiterer Abschnitt A2 kann eine Rücklehne und ein Abschnitt A3 eine Kopfstütze bereitstellen. In jenem den Fahrzeugsitz 2 überstülpenden Zustand der Sitzverkleidung 1, ist letztere bzw. der zugehörige Verkleidungskörper 10 an die Form des Fahrzeugsitzes 2 angepasst. Die Sitzverkleidung 1 kann einen Öffnungsbereich (nicht dargestellt) aufweisen, mit welchem die Sitzverkleidung 1 über den Fahrzeugsitz 2 gestülpt werden kann. Der Öffnungsbereich kann verschließbar ausgebildet sein, beispielsweise mit einem Reißverschluss. Bei einer derartigen Ausbildung kann die Sitzverkleidung 1 bzw. der Verkleidungskörper 10 den Fahrzeugsitz 2 nach dem Drapieren vollständig umgeben.

In der Figur 2 ist ein Ausschnitt der erfindungsgemäßen Sitzverkleidung 1 bzw. des Verkleidungskörpers 10 dargestellt, wobei der Ausschnitt an einer beliebigen Position der Sitzverkleidung 1 wiedergeben kann. Wie dargestellt, kann die Sitzverkleidung 1 eine Lasche 3 aufweisen, die in die Sitzverkleidung 1 (im Wege des 3D-Knittings) eingestrickt wird. An der Lasche 3 kann die Sitzverkleidung 1 bzw. der Verkleidungskörper 10 händisch oder maschinell (z.B. über einen Greifarm) gegriffen werden, die Lasche 3 dient also als Angriffspunkt. Folglich erleichtert die Lasche 3 die Handhabbarkeit der Sitzverkleidung 1 bzw. des Verkleidungskörpers 10 bei der Anordnung auf einem Fahrzeugsitz 2. Zudem können in den Verkleidungskörper 10 Riemen 4, beispielsweise zwei Riemen 4 eingestrickt sein, mit welchen die Sitzverkleidung 1 bzw. der Verkleidungskörper 10 auf dem Fahrzeugsitz 2 fixiert werden kann. Dabei umgibt/umgeben der oder die Riemen 4 den Fahrzeugsitz 2 zumindest partiell.

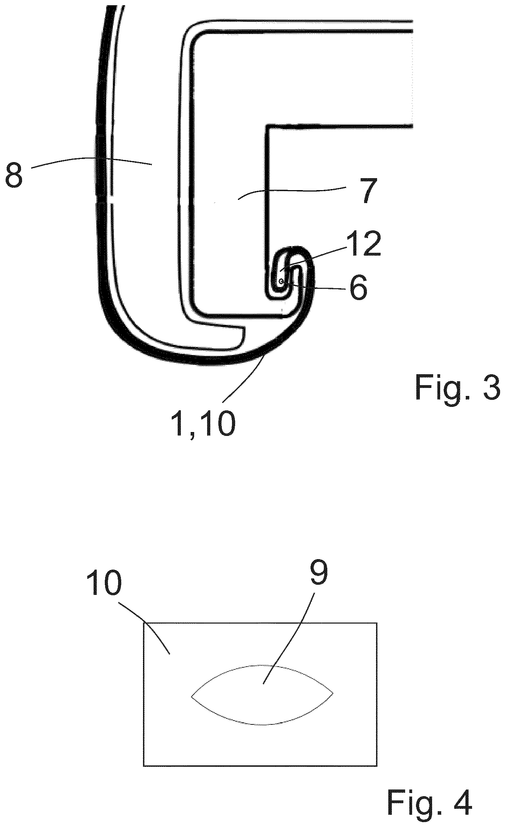

Figur 3 zeigt einen Ausschnitt eines Fahrzeugsitzes 2 sowie einer darauf angeordneten Sitzverkleidung 1. Der Fahrzeugsitz 2 umfasst dabei einen Sitzgrundkörper 7 (dieser kann beispielsweise aus Kunststoff oder Metall gefertigt sein) und eine Polsterung 8. Die Polsterung 8 liegt auf dem Sitzgrundkörper 7 auf bzw. kann an diesem befestigt sein. In dem dargestellten Beispiel ist der vordere Endbereich eines Fahrzeugsitzes 2 illustriert. Die Sitzverkleidung 1 kann an dem Fahrzeugsitz 2 fixiert sein, beispielsweise durch eine an die Sitzverkleidung 1 angestrickte Schlaufe und einen im Bereich der Schlaufe ausgebildeten Kanal 12, durch welchen ein Draht 6 geführt ist. Auch anderweitige Befestigungsvarianten sind denkbar. Der Draht 6 kann um bestimmte Elemente des Fahrzeugsitzes 2 herumgeführt sein, die genaue Positionierung ist jedoch nicht Gegenstand dieser Erfindung.

In der Figur 4 ist ein Ausschnitt des 3D gestrickten Verkleidungskörpers 10 mit einer Öffnung 9 bzw. Aussparung wiedergegeben. Dabei sind die Maschen des Gestricks dahingehend ausgebildet bzw. angeordnet, dass die Öffnung 9 während des Strickprozesses gebildet werden kann. Auch die Öffnung 9 kann ein funktionelles Element im Sinne der vorliegenden Erfindung bereitstellen. Durch derartige Öffnungen können Riemen, Kabel oder andere Bauelemente hindurchgeführt werden.

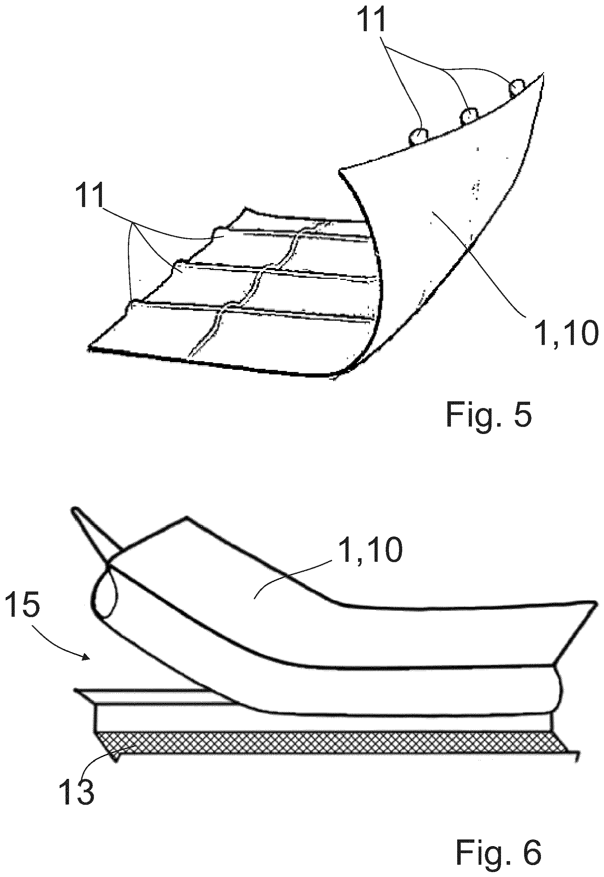

Die Figur 5 zeigt einen Ausschnitt eines Verkleidungskörpers 10 einer Sitzverkleidung 1, die Verstärkungsstrukturen 11 aufweist. Die Verstärkungsstrukturen 11 können - wie dargestellt - als Rippen ausgebildet sein. Bei Anordnung einer derartigen Verstärkungsstruktur zwischen Sitzverkleidung 1 und Fahrzeugsitz 2, kann die Haftreibung zwischen diesen beiden Reibpartnern erhöht werden, wodurch eine positionsfeste Anordnung der Sitzverkleidung 1 bzw. des Verkleidungskörpers 10 erhöht wird, d.h. die Sitzverkleidung 1 neigt dazu, in ihrer drapierten Position zu verbleiben. Letztlich wird durch eine solche Ausbildung einer Verstärkungsstruktur 11 die Rutschfestigkeit der Sitzverkleidung 1 bzw. des Verkleidungskörpers 10 erhöht. Bei Anordnung der Verstärkungsstruktur 11 auf einer nach außen gewandten Oberfläche der Sitzverkleidung 1, d.h. dem Sitz 2 abgewandt bzw. einer auf der Sitzverkleidung 1 aufsitzenden Person zugewandt, wird die Haftreibung zwischen aufsitzender Person und Sitzverkleidung 1 erhöht, wodurch einerseits der Sitzkomfort erhöht wird, als auch die Materialabnutzung der Sitzverkleidung 1 reduziert wird (durch eine Reduzierung von Reibungsbewegungen). Die Ausrichtung der Verstärkungsstrukturen 11 obliegt den jeweiligen Erfordernissen an die Sitzverkleidung 1 und ist erfindungsgemäß nicht festgelegt.

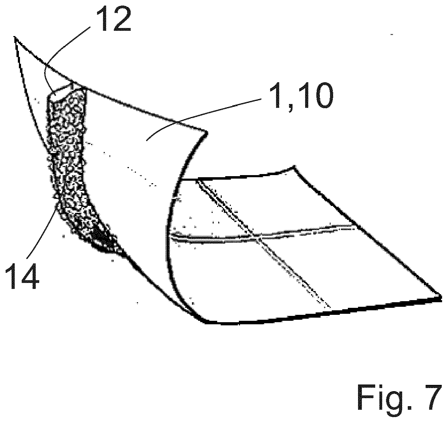

In der Figur 6 ist eine Klettverschlussverbindung 15 zwischen der Sitzverkleidung 1 bzw. dem Verkleidungskörper 10 und dem Fahrzeugsitz 2 wiedergegeben. Eine solche Klettverschlussverbindung 15 stellt eine zusätzliche Möglichkeit zur Befestigung des Verkleidungskörpers 10 an einem Fahrzeugsitz 2 dar. Wie in der Figur 7 genauer gezeigt, können auf der Außenseite eines dem Verkleidungskörper 10 als funktionelles Element zugehörigen Kanals 12 eine Mehrzahl von Schlaufen 14 angeordnet sein. Die Klettverschlussverbindung 15 wird letztlich durch ein Zusammenwirken der Schlaufen 14 mit einer Mehrzahl von sitzseitig angeordneten Widerhaken 13 bereitgestellt.

### Bezugszeichenliste

- 1: Sitzverkleidung
- 2: Fahrzeugsitz
- 3: Lasche
- 4: Riemen
- 6: Draht
- 7: Sitzgrundkörper
- 10: Verkleidungskörper
- 11: Verstärkungsstruktur
- 12: Kanal
- 13: Widerhaken
- 14: Schlaufe
- 15: Klettverschlussverbindung
- A: Abschnitt
- A1: Abschnitt
- A2: Abschnitt
- A3: Abschnitt

## Patentansprüche

1. Sitzverkleidung (1) für einen Fahrzeugsitz (2), die einen dreidimensional gestrickten Verkleidungskörper (10), sowie zumindest ein in den Verkleidungskörper (10) integriertes funktionelles Element umfasst, wobei der Verkleidungskörper (10) ein Abstandsgestrick ist, welches sich aus zwei beabstandet zueinander angeordneten Gestricklagen zusammensetzt, wobei zwischen den Gestricklagen zumindest ein Abstandshalter vorgesehen ist, und wobei innerhalb eines zwischen den Gestricklagen vorgesehenen Hohlraums zumindest ein zusätzliches funktionelles Element oder Bauteil eingefasst ist, insbesondere ein Heizelement, ein Sensor oder ein Kabel.

2. Sitzverkleidung (1) nach Anspruch 1, **dadurch gekennzeichnet, dass** das funktionelle Element in den Verkleidungskörper (10) eingestrickt ist.

3. Sitzverkleidung (1) nach Anspruch 1, **dadurch gekennzeichnet, dass** die Sitzverkleidung (1) einteilig gefertigt ist.

4. Sitzverkleidung (1) nach einem der Ansprüche 1 oder 2, **dadurch gekennzeichnet, dass** das funktionelle Element eine Lasche (3) ist.

5. Sitzverkleidung (1) nach einem der Ansprüche 1 oder 2, **dadurch gekennzeichnet, dass** das funktionelle Element ein Riemen (4) ist, der dazu eingerichtet ist, den Fahrzeugsitz (2) zumindest teilweise zu umgeben, und zur Fixierung der Sitzverkleidung (1) an dem Fahrzeugsitz (2) vorgesehen ist.

6. Sitzverkleidung (1) nach einem der Ansprüche 1 oder 2, **dadurch gekennzeichnet, dass** das funktionelle Element eine in dem Verkleidungskörper (10) ausgebildete Öffnung (9) ist.

7. Sitzverkleidung (1) nach einem der Ansprüche 1 oder 2, **dadurch gekennzeichnet, dass** das funktionelle Element eine Verstärkungsstruktur (11), vorzugsweise eine Rippe, ist.

8. Sitzverkleidung (1) nach einem der Ansprüche 1 oder 2, **dadurch gekennzeichnet, dass** das funktionelle Element ein Kanal (12) ist.

9. Sitzverkleidung (1) nach Anspruch 8, **dadurch gekennzeichnet, dass** auf einer Außenseite des Kanals (12) eine Mehrzahl von Schlaufen (14) angeordnet ist.

10. Sitzverkleidung (1) nach einem der vorangehenden Ansprüche, **dadurch gekennzeichnet, dass** die Gestricklagen ein biegeweiches Fadenmaterial umfassen, und dass der Abstandshalter ein biegesteifes Fadenmaterial umfasst.

11. Verfahren zur Herstellung einer Sitzverkleidung (1) nach einem der Ansprüche 1 bis 10, **dadurch gekennzeichnet, dass** die Sitzverkleidung (1) im Wege eines 3D-Knitting Prozesses gefertigt wird.

## Claims

1. Seat trim (1) for a vehicle seat (2), said trim comprising a three-dimensionally knitted trim body (10) and at least one functional element which is integrated into the trim body (10), wherein the trim body (10) is a knitted spacer fabric, which is made of two knitted fabric layers which are arranged spaced apart from each other, wherein at least one spacer is provided between the knitted fabric layers, and wherein at least one additional functional element or component, in particular a heating element, a sensor or a cable, is enclosed within a hollow space provided between the knitted fabric layers.

2. Seat trim (1) according to Claim 1, **characterized in that** the functional element is knitted into the trim body (10).

3. Seat trim (1) according to Claim 1, **characterized in that** the seat trim (1) is manufactured in one piece.

4. Seat trim (1) according to either of Claims 1 and 2, **characterized in that** the functional element is a tab (3).

5. Seat trim (1) according to either of Claims 1 and 2, **characterized in that** the functional element is a strap (4), which is configured to at least partially surround the vehicle seat (2) and which is provided for fixing the seat trim (1) to the vehicle seat (2).

6. Seat trim (1) according to either of Claims 1 and 2, **characterized in that** the functional element is an opening (9) which is configured in the trim body (10) .

7. Seat trim (1) according to either of Claims 1 and 2, **characterized in that** the functional element is a reinforcement structure (11), preferably a rib.

8. Seat trim (1) according to either of Claims 1 and 2, **characterized in that** the functional element is a duct (12).

9. Seat trim (1) according to Claim 8, **characterized in that** a multiplicity of loops (14) are arranged on an outer side of the duct (12).

10. Seat trim (1) according to one of the preceding claims, **characterized in that** the knitted fabric layers comprise a flexible thread material, and **in that** the spacer comprises a flexurally stiff thread material.

11. Method for producing a seat trim (1) according to one of Claims 1 to 10, **characterized in that** the seat trim (1) is manufactured by means of a 3D knitting process.

## Revendications

1. Habillage de siège (1) pour un siège de véhicule (2), qui comprend un corps d'habillage (10) tricoté tridimensionnellement, ainsi qu'au moins un élément fonctionnel intégré dans le corps d'habillage (10), le corps d'habillage (10) étant un tricot à écartement, qui se compose de deux couches de tricot agencées à distance l'une de l'autre, au moins un écarteur étant prévu entre les couches de tricot, et au moins un élément ou composant fonctionnel supplémentaire étant enchâssé à l'intérieur d'une cavité prévue entre les couches de tricot, notamment un élément chauffant, un capteur ou un câble.

2. Habillage de siège (1) selon la revendication 1, **caractérisé en ce que** l'élément fonctionnel est tricoté dans le corps de l'habillage (10).

3. Habillage de siège (1) selon la revendication 1, **caractérisé en ce que** l'habillage de siège (1) est fabriqué en une seule pièce.

4. Habillage de siège (1) selon l'une quelconque des revendications 1 ou 2, **caractérisé en ce que** l'élément fonctionnel est une languette (3).

5. Habillage de siège (1) selon l'une quelconque des revendications 1 ou 2, **caractérisé en ce que** l'élément fonctionnel est une sangle (4) qui est conçue pour entourer au moins partiellement le siège de véhicule (2) et qui est prévue pour fixer l'habillage de siège (1) au siège de véhicule (2).

6. Habillage de siège (1) selon l'une quelconque des revendications 1 ou 2, **caractérisé en ce que** l'élément fonctionnel est une ouverture (9) pratiquée dans le corps d'habillage (10).

7. Habillage de siège (1) selon l'une quelconque des revendications 1 ou 2, **caractérisé en ce que** l'élément fonctionnel est une structure de renforcement (11), de préférence une nervure.

8. Habillage de siège (1) selon l'une quelconque des revendications 1 ou 2, **caractérisé en ce que** l'élément fonctionnel est un canal (12).

9. Habillage de siège (1) selon la revendication 8, **caractérisé en ce qu'**une pluralité de boucles (14) sont agencées sur un côté extérieur du canal (12).

10. Habillage de siège (1) selon l'une quelconque des revendications précédentes, **caractérisé en ce que** les couches de tricot comprennent un matériau de fil souple en flexion et **en ce que** l'écarteur comprend un matériau de fil rigide en flexion.

11. Procédé de fabrication d'un habillage de siège (1) selon l'une quelconque des revendications 1 à 10, **caractérisé en ce que** l'habillage de siège (1) est fabriqué au moyen d'un processus de tricotage 3D.
